Europäisches Patentamt

European Patent Office

Office européen des brevets

(19)

(11) EP 0 989 476 A2

## (12) EUROPEAN PATENT APPLICATION

(43) Date of publication:
29.03.2000 Bulletin 2000/13

(51) Int Cl.[7]: **G05D 11/13**, B01F 15/04,
D21F 1/08

(21) Application number: 99660150.6

(22) Date of filing: 20.09.1999

(84) Designated Contracting States:
**AT BE CH CY DE DK ES FI FR GB GR IE IT LI LU
MC NL PT SE**
Designated Extension States:
**AL LT LV MK RO SI**

(30) Priority: **21.09.1998 FI 982024**

(71) Applicant: **Neles Controls Oy
00881 Helsinki (FI)**

(72) Inventors:
• **Kreivi, Mika
  00940 Helsinki (FI)**
• **Heikkinen, Pasi
  02940 Espoo (FI)**

(74) Representative: **Langenskiöld, Tord Karl Walter
Ruska & Co. Oy,
Runeberginkatu 5
00100 Helsinki (FI)**

### (54) Balance based mixing control device and control method

(57) The invention relates to the application of balance based control in a fieldbus environment. Examples of cases where control is preferably based on balance calculations are mixing of liquids of different temperatures to form a stream having a desired temperature and flow rate, and the mixing of two solutions to provide a desired concentration. A typical embodiment is consistency control in the pulp industry. The use of balances in a fieldbus environment according to the invention is particularly advantageous as all required measurements are available. Further, an improved method for updating the ratio factor in the balance based control is disclosed.

FIG. 3

EP 0 989 476 A2

**Description**

**Field of the invention**

The invention is related to the field of control technology. More particularly, the invention is related to a device and method for applying balance based control in a fieldbus environment.

**Background of the invention**

*Balance based control*

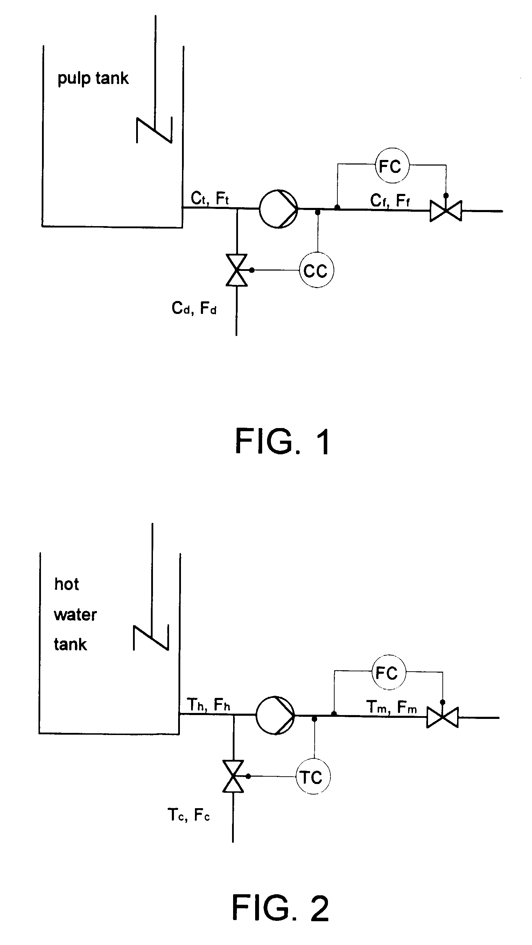

In cases where two streams having different properties are combined to form a third stream having a given, desired property, a balance based control method is advantageous. Such cases are for example the mixing of liquids at different temperatures to form a flow of desired rate and temperature, or the mixing of two solutions to give a desired concentration. A typical example is the control of pulp consistency, where pulp is diluted to a stream having a given final consistency. Such dilution processes are among the most common unit operations in the papermaking industry. Traditionally, dilution is controlled by measuring the consistency of the flow to be diluted and controlling the amount of dilution water while simultaneously measuring and control-ling the product stream by means of an independent loop. A fully analogous case is the dilution of hot water with cold water to arrive at a given final temperature. Figures 1 and 2 show processes of this conventional type.
For a dilution process according to Figure 1, the following mass balance equations can be written:

$$F_t + F_d = F_f$$
$$F_t C_t + F_d C_d = F_f C_f \tag{1a}$$

wherein the F-terms represent mass flows and the C terms concentrations, as shown in the figure. Correspondingly, energy balance equations

$$F_h + F_c = F_m$$
$$F_h T_h + F_c T_c = F_m T_m \tag{1b}$$

can be written for a process according to Figure 2. The F-terms represent mass flows and the T-terms temperatures.
In the case of dilution, $C_d$ is usually small compared to $C_f$ and can be neglected in the latter equation of (1a). The equations can thus be combined to show the relation between the controlled parameter and the control parameter in a steady state situation

$$C_f = C_t - \frac{F_d}{F_f} C_t \tag{2}$$

For the gain $K_{ss}$ of the steady state in a dilution process,

$$K_{ss} = \frac{\partial C_f}{\partial F_d} = -\frac{C_t}{F_f} \tag{3}$$

Hence, the gain of the dilution process becomes directly proportional to the tank consistency (the consistency $F_t$ of the stream $C_t$), and inversely proportional to the flow velocity $F_f$ of the pulp line. The variation of the gain leads to a situation where the controller must be tuned in an operating state where the gain is close to its maximum. A consequence of this is, that the further the operating state is removed from the tuning point, the worse is the control performance. Other factors impeding the traditional control concept are the dead time which varies with flow rate, and the interaction between consistency and flow, as disclosed in e.g. the article by D.P. Dumdie, "Desire good process control? Try a systems approach", *In Tech,* September 1996, 65-69.

The balance equations (1a) can be combined in several ways depending on the configuration and goals of the process to be controlled. In the following approach, the parameter to be controlled is the pulp line consistency and the control parameter is the flow of the dilution water line, $F_{d'}$.

For the consistency control configuration shown in Figure 1, the set point of the dilution water flow is

$$F_{dr} = \left(1 - \frac{C_{fr}}{C_t}\right)F_f \qquad (4)$$

wherein $C_{fr}$ is the set point of the resulting stream consistency. The expression in brackets represents the relation between the mass flows of the resultant stream and the dilution water.

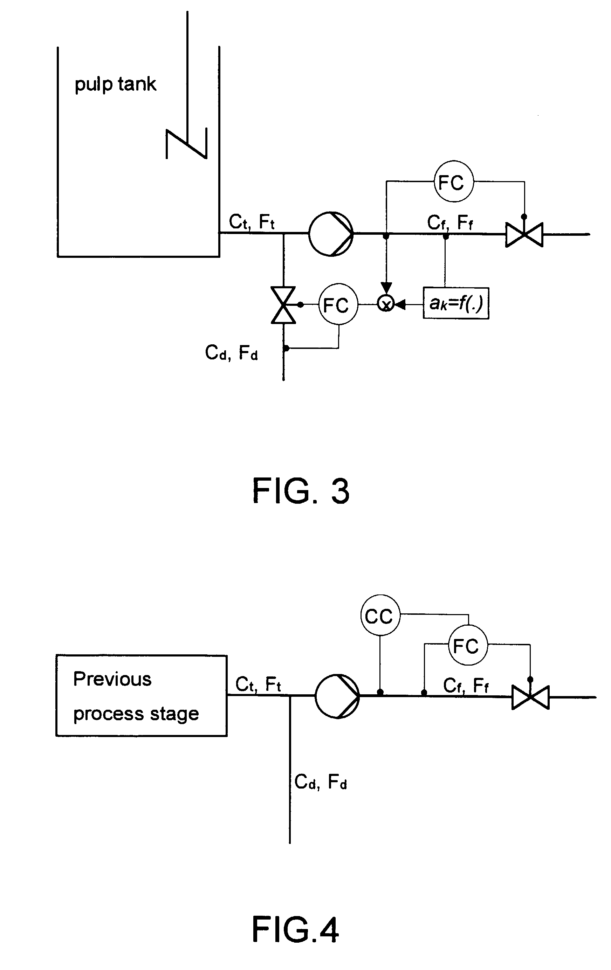

Figure 3 represents relative control according to this concept. Dilution line flow is measured. The flow control of the dilution water forms a cascade loop compensating the pressure fluctuations in the dilution water stream before they affect the primary control parameter, the resultant stream consistency. The effect of deadtime in the dilution loop is now smaller than in a traditional control system, because in such a system the dilution water flow is changed only when the change shows up in the consistency measurement, whereas with ratio control flow changes in the main line are dealt with immediately (see, for example P. Heikkinen, U. Kortela and T. Nummela, "Decoupling Flow and Consistency Control of a Pulp Dilution Process", *Proceedings of the Fifteenth IASTED International Conference,* Innsbruck, Austria, February 1996, 102 - 105, and M. Kreivi, P. Heikkinen, U. Kortela and J. Niinimäki, "Mass Balance Based Dilution Control", *Proceedings of the Seventeenth LASTED International Conference,* Grindelwald, Switzerland, February 1998.)

Because $C_t$ of Equation (4) is unknown, it must be resolved by means of recursive-least-square (RLS) methods. If only one parameter is resolved, the RLS method is almost identical to an integrator. With the aid of RLS or an integrator, changes in the incoming consistency are identified.

US 4,621,927 discloses a mixing control system based on measurement of the concentration in each stream. Thus the ratio term may be directly calculated and need not be estimated. Moreover, the output of the controller for the resultant stream concentration is added to the ratio term, compensated according to the operating point. This application, however, requires two additional concentration meters compared to the configuration of Figure 3. The property that is most important for the final outcome, namely the concentration of the resultant stream is, however, not measured. Without additional installations, the cited application cannot be implemented at sites lacking measurement of incoming stream concentrations.

US 5,671,153 or EP 729 084 discloses a mixing control system wherein all properties can be measured. The value of an unknown concentration is assumed constant and no estimate is made. The concentration of an incoming stream is measured, as is the flow rate which is also controlled.

WO 97/11414 discloses a non-integrating adaptive controller wherein adaptivity is construed in terms of adaptation of a bias term in such a way, that the difference between set point and measured value meets specified requirements. In WO 97/11414, balance equations are used to create a differential equation model for a level control process; balance equations are not, however, used for dilution control nor for designing a control structure or a control algorithm.

*Fieldbus technology*

The origin of present distributed control systems can be found in the eighties. All computing is done centrally at process stations, to which all field devices are connected via one-way 4-20 mA communication. DCS systems are very closed systems, making all operations difficult other than those offered by the system vendor. Therefore, there has been a desire to develop environments with a greater freedom of combining. For example, the Fieldbus Foundation is a coalition of more than a hundred manufacturers of process automation equipment, with a common goal of standardizing the communication protocol of field devices and the functional procedures outplaced into intelligent field devices. The standardization aims at making possible the co-operation of intelligent field devices from the different manufacturers of the coalition, and thus to enable control decentralized into field devices. Other fieldbus standards designed for the process industry are, for example, Profibus DP and Profibus PA, WorldFip, and industrial Ethernet.

An intelligent field device is a device having memory and a microprocessor, able to communicate with other intelligent field devices using a standard communication protocol. A procedural block is a program resident in the memory of an intelligent field device, performing actions assigned to it. With the aid of special configuring tools, a desired control configuration can be designed by interconnecting signals between chosen procedural blocks. Distributed field control is implemented using about thirty standard procedural blocks, like PID, AO, AI etc. In addition to these, manufacturers may design procedural blocks of their own.

**Brief Description of the Drawings**

Figure 1 shows a conventional consistency control system;
Figure 2 shows a temperature control system, analogous to the one shown in Figure 1;
Figure 3 shows an improved ratio control system which can be implemented according to the present invention;
Figure 4 shows another control system that may be implemented according to the present invention;
Figure 5 shows an arrangement according to the invention, enabling the switchover of a control structure in a situation where the flow measurement of the dilution water has failed; and
Figure 6 is a schematic representation of dilution control as a procedural block in a field bus environment.

**Disclosure of the invention**

An object of the invention is to provide a method for implementing ratio control in a fieldbus environment. According to the invention, the ratio factor is adapted to the working conditions, i.e. the ratio factor is updated based on a process measurement. There are several possibilities for determining the ratio factor.
Another object of the invention is to provide a control device for implementing ratio control in a fieldbus environment. The invention is disclosed here by means of the example of consistency control, but the scope of the invention is not limited to control systems involving that particular property.
Denoting the bracketed expression in Equation (4) $a_{(k)}$, the updating function in integral form for the ratio factor at the moment $k$ becomes

$$a_{(k)} = a_{(k-1)} + \alpha\left(C_{f(k)} - C_{fr(k)}\right) \qquad (5)$$

wherein $k\text{-}1$ is the value at the previous instance of sampling, and $\alpha$ is the adaptation gain.
When the changing situation of the consistency setpoint is taken into account in Equation (5),

$$a_{(k)} = 1 - \frac{C_{fr(k)}\left(1 - a_{(k-1)}\right)}{C_{fr(k-1)}} + \alpha\left(C_{f(k)} - C_{fr(k)}\right)$$

$$(6)$$

$$\begin{cases} \alpha > 0, & C_{fr(k)} = C_{fr(k-1)} \\ \alpha = 0, & C_{fr(k)} \neq C_{fr(k-1)} \end{cases}$$

Taking the consistency setpoint into account while updating the ratio factor improves control performance in situations where the consistency setpoint is changing. According to the prior art, the ratio factor is updated by means of an integrator, whereas according to the present invention a new value for the ratio factor is calculated immediately.
For the ratio control gain in the equilibrium state,

$$K_{ss} = \frac{\partial C_f}{\partial a} = -C_t \qquad (7)$$

Compared to Equation (4), in ratio control the impact of the pulp line flow on the dilution process gain is compensated.
In situations of changing the consistency setpoint and of changing the main line flow setpoint, it is not advantageous to update the integrator, as the integrator error variable grows as a consequence of the setpoint change and not as a consequence of a change in input consistency. According to the present invention, the value of the ratio factor is kept constant (integrator update on hold) for a defined period following a change in one of the aforementioned setpoints.

The non-updating periods are typically approximately the length of the settling time of a setpoint change response. In this context, settling time refers to the period required for the absolute value of the controller error variable to stay within about five percent following a setpoint change. According to the invention, P-PID algorithms familiar to those skilled in the art may be used, see e.g. K. Åström and T. Hägglund: PID Controllers, Theory, Design and Tuning, 2nd Edition, ISA, USA, pp. 156-159). The advantage of this algorithm is the compensation of the deadtime occurring in consistency control. This dead time is dependent on the volume and flow velocities in the piping between the dilution and measuring points. Substituting a P-PID algorithm for an integrator improves the stability in the identification of input consistency, in cases where the travel time delay between the dilution point and consistency measurement point is large or fluctuates strongly.

Depending on the configuration of the relevant process, consistency control may be implemented according to various concepts. The consistency control principle shown in Figure 4 represents a design used in classification, a common unit operation in the paper industry. In the case described above, the measured quantities were the dilution water flow and the pulp line flow and consistency. Now, instead of the dilution water flow, the input flow $F_t$ is measured. The flow $F_t$, originating from the previous process stage, can be assumed to be independent of flow $F_f$. The desired property, for example consistency, is controlled by means of changing flow $F_f$, variations of which affects the dilution water flow. Regardless of the formed cascade loop, this design cannot compensate the process gain changes arising from flow speed and changes in input consistency.

A control design according to the present invention can be applied also in this case. As in the case described previously, the value of the input consistency must be identified. The latter case differs from the former in that the setpoint $F_{fr}$ of pulp flow $F_f$ is solved by means of the identified consistency and the measured flow $F_t$, and not the setpoint $F_{dr}$ of the dilution flow $F_d$.

In some applications, the number of measurements is sufficient for solving the balance equation, whereby the identification of unknown quantities is not necessary. This does not, however, bring any significant simplifications to the control concept, because measurements often involve level errors which must be compensated in balance based control designs. If, for example, all variables in Equation (1a) are known, i.e. can be measured, calculated or assumed constant, in practice the balance does not necessarily match. In this context, compensation means using an additional bias term to balance the equation. In practice, the bias term is used to adjust a chosen measured value in order to satisfy the balance. The measurement to be biased is elected by firstly eliminating the primary control parameter and choosing the least reliable of those remaining.

In temperature control, the situation is analogous to the case of consistency control. An approximation like $C_d = 0$, as was made in consistency control, cannot be made in temperature processes. This does not, however, significantly change the equations set forth above. The basic concept of the control design remains the same.

A control structure according to the invention often requires, for example, the addition of a dilution water measurement in the case of dilution control. If a malfunction occurs in the added measurement, the whole control structure fails. In a manner known to the person skilled in the art, it is possible to add a switch enabling a changeover to a control structure where the malfunctioning measurement is not required.

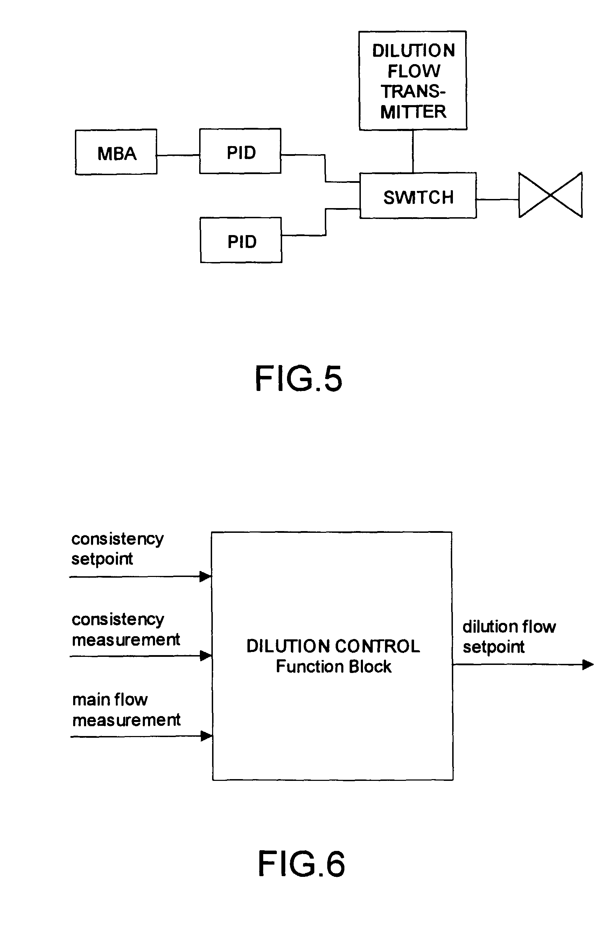

Automatic switching of control structure in the case of flow measurement failure increases the reliability of the system by introducing redundancy. Such an arrangement is schematically shown for a dilution case in Figure 5, where the block MBA (Mass Balance) represents a unit computing balances. According to an embodiment of the present invention, the control structure changes automatically if the dilution water flow measurement fails, and control will rely on a PID structure, operating without the malfunctioning measurement.

In present DCS systems, the implementation of a control design according to the present invention is complicated. The proper environment for control structures according to the invention is a field bus device, in particular a device according to the specifications of the Fieldbus Foundation. All required measurements are available due to the transparency of the bus. The specification and application environment also enable smooth implementation of required control designs in a field device. Dilution control according to the present invention is a manufacturer-specific field bus functional block, as shown in Figure 6. The lower cascade loop in dilution can be made significantly faster using field control compared to DCS control, enhancing control structure performance. Field bus technology offers completely novel opportunities for control structures.

**Claims**

1. A method for combining a first incoming stream and a second incoming stream to form a resultant stream having a controllable property, simultaneously controlling said controllable property, characterised in applying ratio control within a fieldbus environment and updating the ratio factor according to balance calculations.

2. A method according to claim 1, characterised in the ratio factor between the resultant stream and the controlled stream being updated during control according to the following formula:

$$a_{(k)} = 1 - \frac{C_{fr(k)}\left(1 - a_{(k-1)}\right)}{C_{fr(k-1)}} + \alpha\left(C_{f(k)} - C_{fr(k)}\right)$$

(6)

$$\begin{cases} \alpha > 0, & C_{fr(k)} = C_{fr(k-1)} \\ \alpha = 0, & C_{fr(k)} \neq C_{fr(k-1)} \end{cases}$$

3. A method according to claim 1, characterised by the ratio factor between the resultant stream and the controlled stream being updated during control by means of a P-PID algorithm.

4. A method according to any one of claims 1 to 3, characterised by the updating of the ratio factor being temporarily held during a change in set point of the primary control variable or set point of the resultant stream.

5. A method according to any one of claims 1 to 4, characterised by the controlled flow rate being the resultant stream flow rate.

6. A method according to any one of claims 1 to 5, characterised by the property to be controlled of the resultant stream being known in the first incoming stream.

7. A method according to any one of claims 1 to 6, characterised by the flow rate of one incoming stream being measured and the control structure being automatically switched in the case said flow rate measurement malfunctions, into a control structure able to function without the malfunctioning measurement.

8. A control device for combining a first incoming stream and a second incoming stream to form a resultant stream having a controllable property, characterised in the device being adapted to a fieldbus environment and including means for applying ratio control, the ratio factor being updated according to balance calculations.

9. A control device according to claim 8, characterised by including means for controlling the flow rate of one of the three streams, and for updating the ratio factor between the resultant stream and the controlled stream during control according to the following formula:

$$a_{(k)} = 1 - \frac{C_{fr(k)}\left(1 - a_{(k-1)}\right)}{C_{fr(k-1)}} + \alpha\left(C_{f(k)} - C_{fr(k)}\right)$$

(6)

$$\begin{cases} \alpha > 0, & C_{fr(k)} = C_{fr(k-1)} \\ \alpha = 0, & C_{fr(k)} \neq C_{fr(k-1)} \end{cases}$$

10. A control device according to claim 8, characterised by including means for updating the ratio factor between the resultant stream and the controlled stream during control by means of a P-PID algorithm.

11. A control device according to any one of claims 8 to 10, characterised by including means for temporarily holding the updating of the ratio factor during a change in set point of the primary control variable or set point of the resultant stream.

12. A control device according to any one of claims 8 to 13, characterised by including means for controlling the

**EP 0 989 476 A2**

resultant stream.

13. A control device according to any one of claims 8 to 12, characterised by including means for measuring the controllable property of the resultant stream in the first incoming stream.

14. A control device according to any one of claims 8 to 13, characterised by including means for measurement of the flow rate of one incoming stream and means for automatically switching the control structure in the case said flow rate measurement malfunctions, into a control structure able to function without the malfunctioning measurement.

15. Use of a method according to any one of claims 1 to 7 in a fieldbus environment.

**7**

pulp tank

$C_t, F_t$

FC

$C_f, F_f$

CC

$C_d, F_d$

# FIG. 1

hot water tank

$T_h, F_h$

FC

$T_m, F_m$

TC

$T_c, F_c$

# FIG. 2

## FIG. 3

pulp tank

$C_t, F_t$

$C_f, F_f$

FC

FC

$a_k = f(.)$

$C_d, F_d$

## FIG.4

Previous process stage

$C_t, F_t$

CC

FC

$C_f, F_f$

$C_d, F_d$

FIG.5

FIG.6